# EUROPEAN PATENT APPLICATION

(11) **EP 2 704 478 A1**
(43) Date of publication of application: **05.03.2014**
(21) Application number: 12776027.0
(22) Date of filing: 24.04.2012
(51) Int. Cl.: H04W 24/10, H04W 36/00

(54) **MOBILE COMMUNICATION METHOD, WIRELESS BASE TERMINAL, AND MOBILE MANAGEMENT NODE**

(30) Priority: 28.04.2011 JP 2011102516
(71) Applicant: NTT DOCOMO, INC., Chiyoda-ku Tokyo 100-6150 (JP)
(72) Inventor: TAKAHASHI, Hideaki, Tokyo 100-6150 (JP); HAPSARI, Wuri Andarmawanti, Tokyo 100-6150 (JP); TANAKA, Itsuma, Tokyo 100-6150 (JP)
(74) Representative: HOFFMANN EITLE
(86) International application number: PCT/JP2012/060960
(87) International publication number: WO 2012/147735

(57) **Abstract**

Control is performed such that an instruction is not provided to a mobile station UE, which becomes a roaming state by handover, to perform MDT. A mobile communication method according to the present invention includes a step in which a radio base station eNB#1 determines whether "Serving PLMN" of a mobile station UE changes after a procedure to hand over the mobile station UE to a cell under a dominant of a radio base station eNB#2 from a cell under a dominant of the radio base station eNB#1 is completed; and a step in which the radio base station eNB#1 notifies the radio base station eNB#2 of "MDT User Consent Status" when detecting that "Serving PLMN" of the mobile station UE changes, "MDT User Consent Status" indicating that performance of the MDT is not authorized in the mobile station UE.

## Description

### Technical Field

The present invention relates to a mobile communication method, a radio base station and a mobile management node.

### Background Art

"MDT (Minimisation of Drive Tests)" is defined in an LTE (Long Term Evolution) system.

In "Management Based MDT" in which a measurement result is acquired from any mobile station UE in a measurement target area, there is proposal that a mobile station UE that is caused to perform the MDT is selected based on "MDT User Consent Status (an authorization status)" indicating whether performance of the MDT is authorized in each mobile station UE (see Non-Patent Literatures 1 and 2).

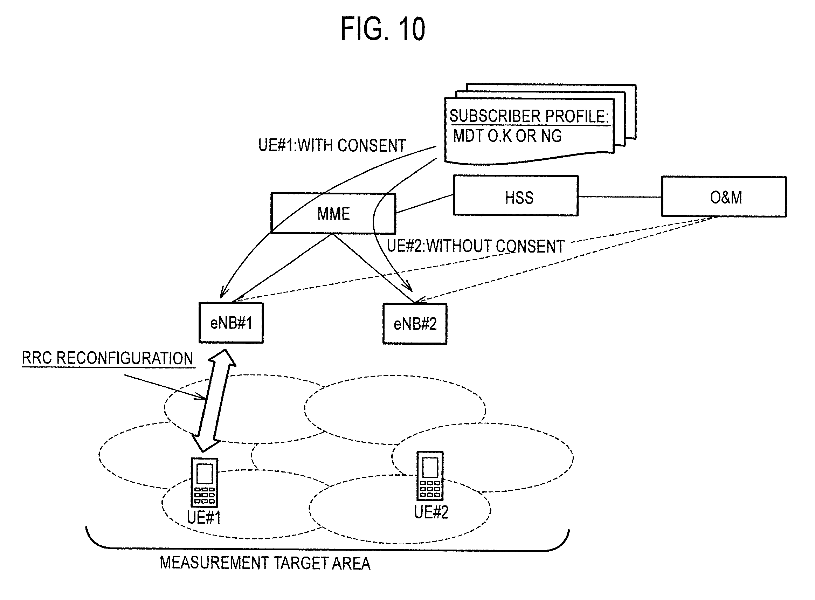

Specifically, as illustrated in Fig. 10, in the case that "Management Based MDT" is performed, an operation and maintenance server O&M is configured to provide an instruction to radio base stations eNB#1/eNB#2, each of which manages a cell included in a measurement target area, to perform "Management Based MDT".

In the case that "Management Based MDT" is performed, a mobile management node MME(Mobility Management Entity) is configured to notify the radio base stations eNB#1/eNB#2 of "MDT User Consent Status" related to each mobile station UE.

In the case that "Management Based MDT" is performed, the radio base stations eNB#1/eNB#2 provide the instruction to the mobile station UE#1, which is authorized to perform the MDT, to perform the MDT using "RRC Reconfiguration", and the radio base stations eNB#1/eNB#2 do not provide the instruction to the mobile station UE#2, which is not authorized to perform the MDT, to perform the MDT.

In the LTE system, there is also a proposal that, in "Management Based MDT", not only the mobile management node MME notifies the radio base station eNB of "MDT User Consent Status" related to each mobile station UE, but also the radio base stations eNB notify each other of "User Consent Status" related to each mobile station UE (see Non-Patent Literatures 1 and 2).

### Citation List

### Non-Patent Literature

Non-Patent Literature 1: 3GPP contribution R3-110933
Non-Patent Literature 2: 3GPP contribution R3-110934
Non-Patent Literature 3: 3GPP contribution R3-111136

### Summary of Invention

A requirement that the measurement result of the MDT should not be acquired from the mobile station UE (Roaming User) in a roaming state is defined in the LTE system (see Non-Patent Literature 3).

However, in the existing LTE mobile communication system, because the radio base station eNB cannot determine whether each mobile station UE is in the roaming state, unfortunately the radio base station eNB cannot perform control so as not to provide the instruction to the mobile station UE in the roaming state to perform the MDT.

Particularly, in the existing LTE mobile communication system, unfortunately the control cannot be performed such that the instruction is not provided to the roaming-state mobile station UE, in which "Serving PLMN (Public Land Mobile Network)" is changed by S1 handover or X2 handover, to perform the MDT.

The present invention has been devised to solve the problems described above, and an object thereof is to provide a mobile communication method, a radio base station, and a mobile management node, for being able to perform the control such that the instruction is not provided to the mobile station UE, which becomes the roaming state by the handover, to perform the MDT.

In accordance with a first feature of the present invention, a mobile communication method includes: a step in which a first radio base station determines whether a serving PLMN of a mobile station changes after a procedure to hand over the mobile station to a cell under a dominant of a second radio base station from a cell under a dominant of the first radio base station is completed; and a step in which the first radio base station notifies the second radio base station of an authorization status when detecting that the serving PLMN of the mobile station changes, the authorization status indicating that performance of minimization of drive tests is not authorized in the mobile station.

In accordance with a second feature of the present invention, a radio base station that can operate as a first radio base station in a mobile communication system configured to be able to perform a procedure to hand over a mobile station to a cell under a dominant of a second radio base station from a cell under a dominant of the first radio base station, includes: a determination unit that is configured to determine whether the serving PLMN of the mobile station changes after the handover procedure is completed; and a transmission unit that is configured to notify the second radio base station of an authorization status indicating that performance of minimization of drive tests is not authorized in the mobile station when the determination unit detects that the serving PLMN of the mobile station changes.

In accordance with a third feature of the present invention, a mobile communication method includes: a step in which a mobile station transmits a location registration area update request signal to a mobile management node when a serving PLMN of the mobile station changes after a procedure to hand over the mobile station to a cell under a dominant of a second radio base station from a cell under a dominant of a first radio base station is completed; and a step in which the mobile management node notifies the second radio base station of an authorization status indicating that performance of minimization of drive tests is not authorized in the mobile station using a message that transmits a location registration area update reception signal.

In accordance with a fourth feature of the present invention, a mobile management node is configured to notify a second radio base station of an authorization status indicating that performance of minimization of drive tests is not authorized in a mobile station using a message that transmits a location registration area update reception signal in response to a location registration area update request signal received from the mobile station when a serving PLMN of the mobile station changes after a procedure to hand over the mobile station to a cell under a dominant of a second radio base station from a cell under a dominant of a first radio base station is completed.

In accordance with a fifth feature of the present invention, a mobile communication method for performing a procedure to hand over a mobile station to a cell under a dominant of a second radio base station from a cell under a dominant of a first radio base station, includes: a step in which the first radio base station notifies the second radio base station of a PLMN list valid in the first radio base station; a step in which the second radio base station determines whether a serving PLMN of the mobile station after the handover procedure is completed based on the PLMN list; and a step in which the second radio base station does not provide an instruction to the mobile station to perform minimization of drive tests when detecting that the serving PLMN of the mobile station changes.

In accordance with a sixth feature of the present invention, a radio base station that can operate as a second radio base station in a mobile communication system configured to be able to perform a procedure to hand over a mobile station to a cell under a dominant of the second radio base station from a cell under a dominant of a first radio base station, includes: a reception unit that is configured to acquire a PLMN list, which is valid in the first radio base station, from the first radio base station; a determination unit that is configured to determine whether a serving PLMN of the mobile station changes after the handover procedure is completed based on the PLMN list; and a transmission unit that is configured to provide an instruction to the mobile station to perform minimization of drive tests when the determination unit detects that the serving PLMN of the mobile station changes.

### Brief Description of Drawings

Fig. 1 is an entire configuration diagram of a mobile communication system according to a first embodiment of the present invention.
Fig. 2 is a functional block diagram of a radio base station according to the first embodiment of the present invention.
Figs 3 (a) and 3 (b) are views illustrating an example of a method for detecting a change of Serving-PLMN in the radio base station according to the first embodiment of the present invention.
Fig. 4 is a sequence diagram illustrating operation of the mobile communication system according to the first embodiment of the present invention.
Fig. 5 is a sequence diagram illustrating the operation of a mobile communication system according to a second embodiment of the present invention.
Figs 6 (a) and 6 (b) are views illustrating format examples of an information element "Downlink NAS Transport" and an information element "MDT User Consent Status", which are used in the mobile communication system according to the second embodiment of the present invention.
Fig. 7 is a functional block diagram of a radio base station according to a third embodiment of the present invention.
Fig. 8 is a sequence diagram illustrating the operation of the mobile communication system according to the third embodiment of the present invention.
Figs 9 (a) and 9 (b) are views illustrating format examples of the information element "MDT User Consent Status" and an information element "Consent Status PLMN List", which are used in the mobile communication system according to the third embodiment of the present invention.
Fig. 10 is a view illustrating the operation of a conventional mobile communication system.

### Description of Embodiments

### (Mobile communication system of first embodiment of the present invention)

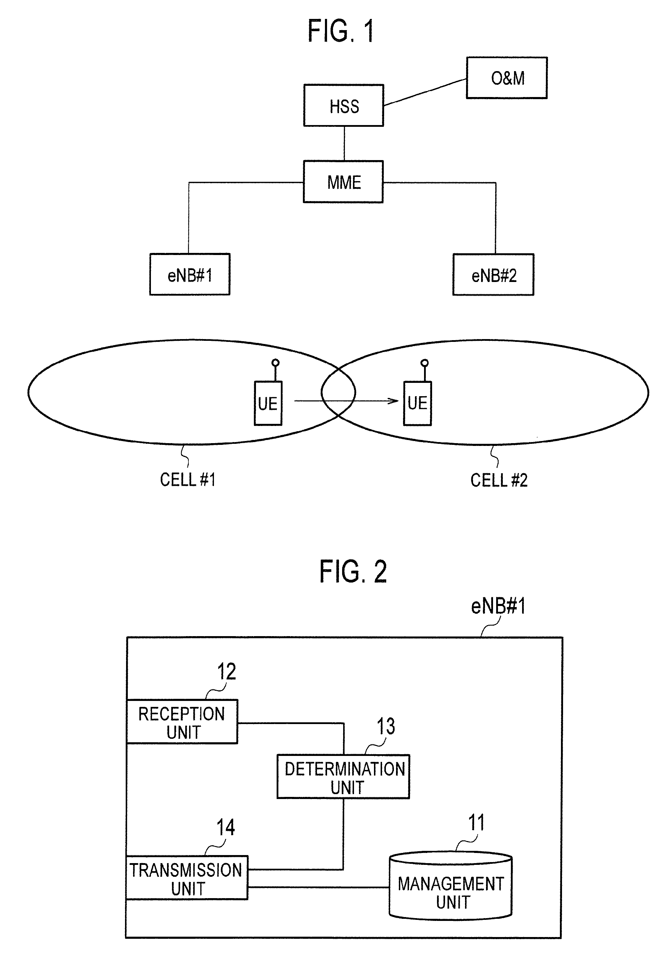

A mobile communication system according to a first embodiment of the present invention will be described with reference to Figs. 1 to 4.

As illustrated in Fig. 1, the mobile communication system of the embodiment is an LTE mobile communication system, and includes radio base stations eNB#1/eNB#2, a mobile management node MME, a home subscriber server HSS, and an operation and maintenance server O&M.

The mobile communication system of the embodiment is configured to be able to perform "Management Based MDT".

In the mobile communication system of the embodiment, the case that a mobile station UE is handed over to a cell #2 under a dominant of the radio base station eNB#2 from a cell #1 under the dominant of the radio base station eNB#1 will be described by way of example as illustrated in Fig. 1.

As illustrated in Fig. 2, the radio base station eNB#1 that acts as a radio base station of a handover source includes a management unit 11, a reception unit 12, a determination unit 13, and a transmission unit 14.

The management unit 11 is configured to manage "MDT User Consent Status" indicating whether performance of the MDT is authorized in the mobile station UE currently conducting communication with the cell #1 under the dominant of the radio base station eNB#1.

The management unit 11 is configured to manage "PLMN List" broadcast in the cell #1, namely, the PLMN supported by the cell #1 (or the radio base station eNB#1).

The management unit 11 may be configured to manage "HO Restriction List" that is managed by the mobile station UE currently conducting communication with the cell #1 under the dominant of the radio base station eNB#1.

The reception unit 12 is configured to receive broadcast information in neighboring cells (for example, the cell #2).

Specifically, the reception unit 12 may be configured to acquire "PLMN List" included in the broadcast information in the neighboring cells (for example, the cell #2).

The reception unit 12 may be configured to acquire "PLMN List" using "X2 Setup Message", "eNB Configuration Update Message" or the like, for example, when the radio base station eNB#1 establishes an X2 interface with the adjacent radio base station eNB.

The determination unit 13 is configured to determine whether "Serving PLMN" of the mobile station UE changes after a procedure to hand over the mobile station UE to the cell #2 from the cell #1 is completed, namely, whether "Serving PLMN" of the current mobile station UE provides service in the cell #2.

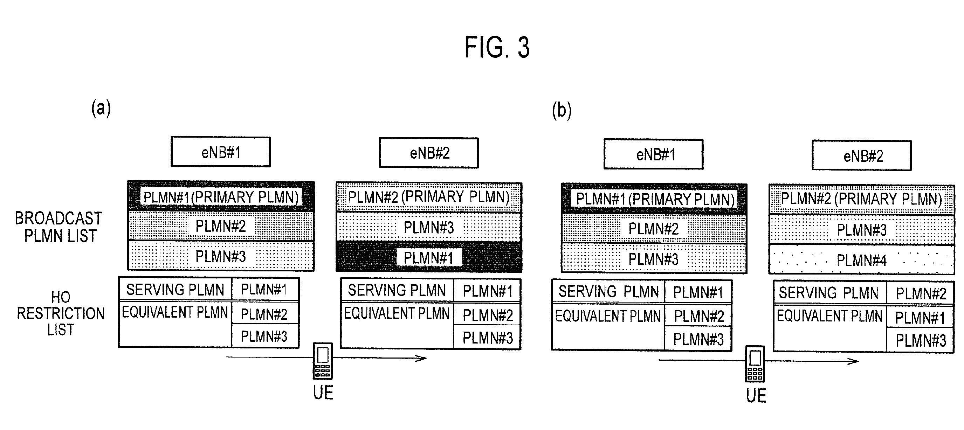

For example, as illustrated in Figs. 3 (a) and 3(b), the determination unit 13 is configured to determine whether "Serving PLMN" of the mobile station UE changes by comparing "PLMN List" broadcast in the cell #2 to "Serving PLMN" of the mobile station UE in the cell #1.

At this point, as illustrated in Fig. 3(a), the determination unit 13 is configured to determine that "Serving PLMN" of the mobile station UE does not change in the case that "PLMN List (PLMN#1 to PLMN#3) " broadcast in the cell #2 includes "Serving PLMN (PLMN#1)" of the mobile station UE in the cell #1.

As illustrated in Fig. 3(a), the determination unit 13 may be configured to determine that "Serving PLMN" of the mobile station UE does not change in the case that "PLMN List" broadcast in the cell #2 does not include "Serving PLMN (PLMN#1)" of the mobile station UE in the cell #1 as "Primary PLMN".

On the other hand, as illustrated in Fig. 3(b), the determination unit 13 is configured to determine that "Serving PLMN" of the mobile station UE changes in the case that "PLMN List (PLMN#1 to PLMN#3)" broadcast in the cell #2 does not include "Serving PLMN (PLMN#1)" of the mobile station UE in the cell #1.

In such cases, as illustrated in Fig. 3(b), the determination unit 13 may be configured to determine that, in "PLMN List (PLMN#1 to PLMN#3)" broadcast in the cell #2, "PLMN (PLMN#2)" included in "HO Restriction List" of the mobile station UE as "Equivalent PLMN" is "Serving PLMN (PLMN#2)" of the mobile station UE in the cell #2.

The transmission unit 14 is configured to notify the radio base station eNB#2 of "MDT User Consent Status" indicating that the performance of the MDT is not authorized in the mobile station UE in the case that the determination unit 13 detects that "Serving PLMN" of the mobile station UE changes.

For example, the transmission unit 14 may be configured to notify the radio base station eNB#2 of the authorization status using bit information indicating whether the performance of the MDT is authorized in the mobile station UE.

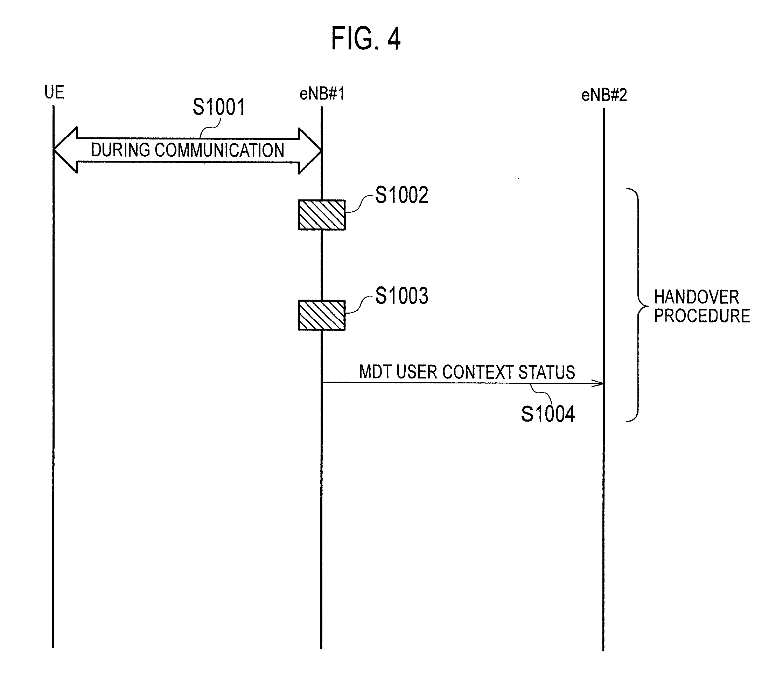

An example of operation of the mobile communication system according to the first embodiment of the present invention will be described with reference to Fig. 4.

As illustrated in Fig. 4, when the mobile station UE is in a connected state in the cell #1 under the dominant of the radio base station eNB#1 in Step S1001, the radio base station eNB#1 determines to start the procedure to hand over the mobile station UE to the cell #2 from the cell #1 in Step S1002.

After the procedure to hand over the mobile station UE to the cell #2 from the cell #1, the radio base station eNB#1 determines whether "Serving PLMN" of the mobile station UE changes in Step S1003.

When determining that "Serving PLMN" of the mobile station UE changes, the radio base station eNB#1 notifies the radio base station eNB#2 of "MDT User Consent Status" indicating that the performance of the MDT is not authorized in the mobile station UE in Step S1004.

In such cases, the radio base station eNB#1 may notify the radio base station eNB#2 of "MDT User Consent Status" using "HO Request", "HO Required" or the like.

On the other hand, when determining that "Serving PLMN" of the mobile station UE does not change, the radio base station eNB#1 notifies the radio base station eNB#2 of "MDT User Consent Status" related to the mobile station UE managed by the radio base station eNB#1 in Step S1004.

In such cases, the radio base station eNB#1 may notify the radio base station eNB#2 of "MDT User Consent Status" using "HO Request", "HO Required" or the like.

As a result, after the handover procedure is completed, the radio base station eNB#2 does not provide the instruction to the mobile station UE to perform the MDT.

According to the mobile communication system of the first embodiment of the present invention, when the radio base station eNB#1 that is of the radio base station of the handover source determines that "Serving PLMN" of the mobile station UE changes after the procedure to hand over the mobile station UE to the cell #2 from the cell #1, the radio base station eNB#1 is configured to notify the radio base station eNB#2 of "MDT User Consent Status" indicating that the performance of the MDT is not authorized in the mobile station UE irrespective of "MDT User Consent Status" related to the mobile station UE managed by the radio base station eNB#1. Therefore, a situation to provide the instruction to the roaming-state mobile station UE, in which "Serving PLMN" is changed by the S1 handover or the X2 handover, to perform the MDT can be avoided.

### (Mobile communication system of second embodiment of the present invention)

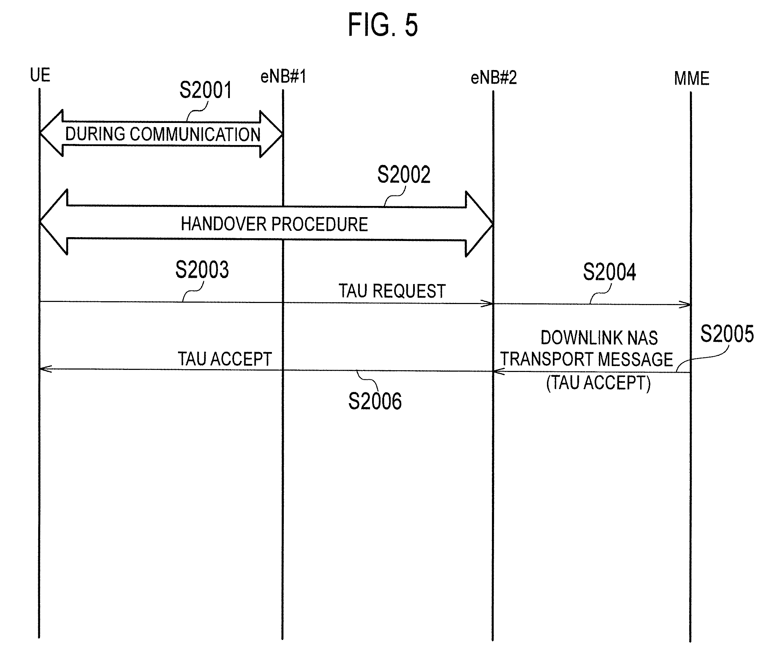

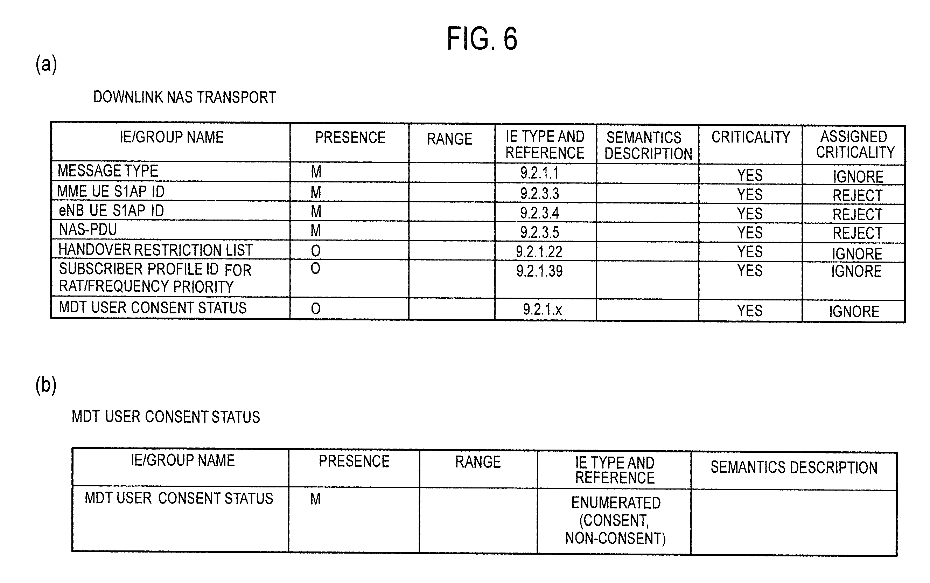

A mobile communication system according to a second embodiment of the present invention will be described with reference to Figs. 5 and 6. The mobile communication system according to the second embodiment of the present invention will be described below by focusing on a point different from the mobile communication system of the first embodiment.

The operation of the mobile communication system according to the second embodiment of the present invention will be described with reference to Figs. 5 and 6.

As illustrated in Fig. 5, when the mobile station UE is in a connected state in the cell #1 under the dominant of the radio base station eNB#1 in Step S2001, the radio base station eNB#1 performs the procedure to hand over the mobile station UE to the cell #2 from the cell #1 in Step S2002.

When "Serving PLMN" of the mobile station UE changes after the handover procedure is completed, the mobile station UE transmits "TAU (Tracking Area Update)" to the mobile management node MME through the radio base station eNB#2 in Steps S2003/S2004.

The mobile management node MME determines whether "Serving PLMN" of the mobile station UE changes in Step S2005, and transmits "Downlink NAS Transport message" including "TAU Accept" to the radio base station eNB#2 based on the determination result in Step S2005.

At this point, as illustrated in Fig. 6(a), the mobile management node MME sets an information element "MDT User Consent Status" to "Downlink NAS Transport message".

"MDT User Consent Status (consent/non-consent)" indicating whether the performance of the MDT is authorized in the mobile station UE can be set to the information element "MDT User Consent Status".

When determining that "Serving PLMN" of the mobile station UE changes, the mobile management node MME sets "MDT User Consent Status (non-consent)" indicating that the performance of the MDT is not authorized in the mobile station UE to the information element "MDT User Consent Status".

On the other hand, when determining that "Serving PLMN" of the mobile station UE does not change, the mobile management node MME sets "MDT User Consent Status (consent/non-consent)" of the mobile station UE managed by the mobile management node MME to the information element "MDT User Consent Status".

In Step S2006, the radio base station eNB#2 transmits an RRC (Radio Resource Control) message including "TAU Accept" to the mobile station UE.

As a result, after the TAU procedure is completed, the radio base station eNB#2 does not provide the instruction to the mobile station UE to perform the MDT.

According to the mobile communication system of the second embodiment of the present invention, when determining that "Serving PLMN" of the mobile station UE changes in the TAU procedure of the mobile station UE after the procedure to hand over the mobile station UE to the cell #2 from the cell #1, the mobile management node MME is configured to notify the radio base station eNB#2 of "MDT User Consent Status" indicating that the performance of the MDT is not authorized in the mobile station UE irrespective of "MDT User Consent Status" related to the mobile station UE managed by the mobile management node MME. Therefore, the situation to provide the instruction to the roaming-state mobile station UE, in which "Serving PLMN" is changed by the S1 handover or the X2 handover, to perform the MDT can be avoided.

### (Mobile communication system of third embodiment of the present invention)

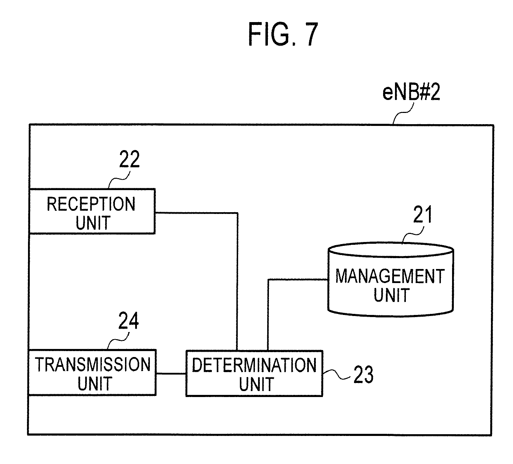

A mobile communication system according to a third embodiment of the present invention will be described with reference to Figs. 7 to 9. The mobile communication system according to the third embodiment of the present invention will be described below by focusing on the point different from the mobile communication system of the first embodiment.

As illustrated in Fig. 7, the radio base station eNB#2 that acts as the radio base station of the handover destination includes a management unit 21, a reception unit 22, a determination unit 23, and a transmission unit 24.

The management unit 21 is configured to manage the PLMN supported by the cell #2 (or the radio base station eNB#2), namely, the PLMN valid in the cell #2 (or the radio base station eNB#2).

The reception unit 22 is configured to acquire the PLMN supported by the cell #1 (or the radio base station eNB#1), namely, the PLMN (including information on "Serving PLMN" of the mobile station UE in the cell #1) valid in the cell #1 (or the radio base station eNB#1) from the cell #1.

The reception unit 22 is configured to acquire "MDT User Consent Status" indicating whether performance of the MDT is authorized in the mobile station UE from the cell #1.

The determination unit 23 is configured to determine whether "Serving PLMN" of the mobile station UE changes after the procedure to hand over the mobile station UE to the cell #2 from the cell #1 is completed.

For example, the determination unit 23 is configured to determine whether "Serving PLMN" of the mobile station UE changes by comparing "PLMN List" broadcast in the cell #2 to "Serving PLMN" of the mobile station UE in the cell #1.

At this point, the determination unit 23 is configured to determine that "Serving PLMN" of the mobile station UE does not change in the case that "PLMN List (PLMN#1 to PLMN#3)" supported by the cell #2 (or the radio base station eNB#2) includes "Serving PLMN (PLMN#1)" of the mobile station UE in the cell #1.

On the other hand, the determination unit 23 is configured to determine that "Serving PLMN" of the mobile station UE changes in the case that "PLMN List (PLMN#1 to PLMN#3)" supported by the cell #2 (or the radio base station eNB#2) does not include "Serving PLMN (PLMN#1)" of the mobile station UE in the cell #1.

The transmission unit 24 is configured to provide the instruction to the mobile station UE to perform the MDT in the case that the determination unit 23 detects that "Serving PLMN" of the mobile station UE does not change and in the case that the reception unit 22 receives "MDT User Consent Status" indicating that the performance of the MDT is authorized in the mobile station UE.

On the other hand, the transmission unit 24 is configured not to provide the instruction to the mobile station UE to perform the MDT in the case that the determination unit 23 detects that "Serving PLMN" of the mobile station UE changes or in the case that the reception unit 22 receives "MDT User Consent Status" indicating that the performance of the MDT is not authorized in the mobile station UE.

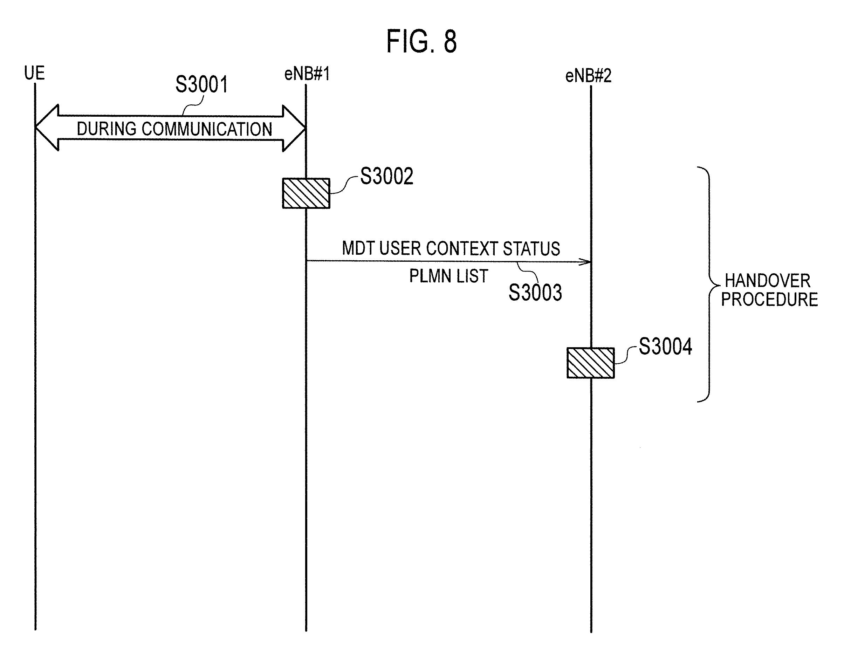

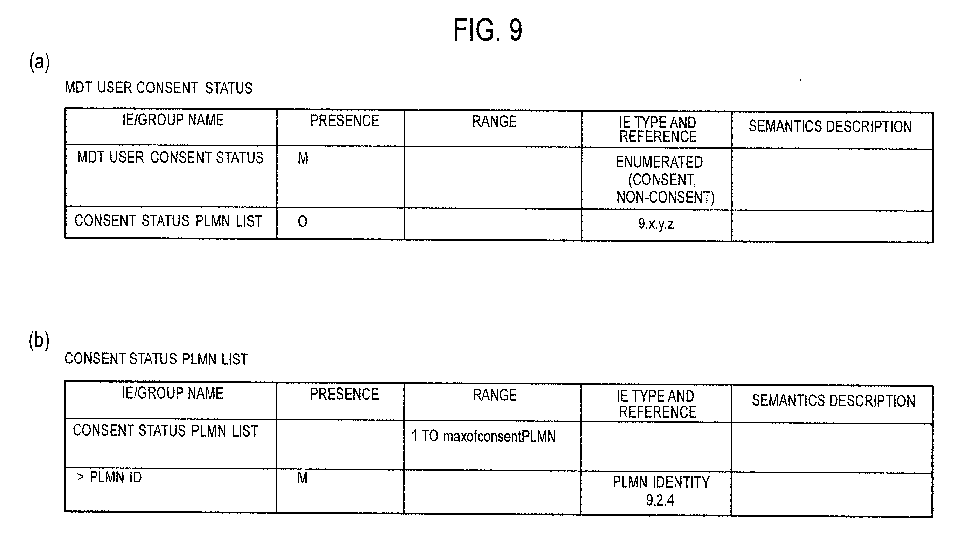

The operation of the mobile communication system according to the third embodiment of the present invention will be described with reference to Figs. 8 and 9.

As illustrated in Fig. 8, when the mobile station UE is in the connected state in the cell #1 under the dominant of the radio base station eNB#1 in Step S3001, the radio base station eNB#1 determines to start the procedure to hand over the mobile station UE to the cell #2 from the cell #1 in Step S3002.

In Step S3003, the radio base station eNB#1 notifies the radio base station eNB#2 of "PLMN List" and "MDT User Consent Status" of the mobile station UE. "PLMN List" and "MDT User Consent Status" of the mobile station UE are supported by the cell #1 (or the radio base station eNB#1).

At this point, the radio base station eNB#1 notifies the radio base station eNB#2 of "MDT User Consent Status" of the mobile station UE using the information element "MDT User Consent Status" as illustrated in Fig. 9(a), and the radio base station eNB#1 notifies the radio base station eNB#2 of "PLMN List" using an information element "Consent Status PLMN LIst" in the information element "MDT User Consent Status" as illustrated in Figs. 9(a) and 9(b).

In Step S3004, after the procedure to hand over the mobile station UE to the cell #2 from the cell #1, the radio base station eNB#2 determines whether "Serving PLMN" of the mobile station UE changes based on "PLMN List" received from the radio base station eNb#1.

The radio base station eNB#2 provides the instruction to the mobile station UE to perform the MDT in the case that the radio base station eNB#2 detects that "Serving PLMN" of the mobile station UE does not change and in the case that the radio base station eNB#2 receives "MDT User Consent Status" indicating that the performance of the MDT is authorized in the mobile station UE.

On the other hand, the radio base station eNB#2 does not provide the instruction to the mobile station UE to perform the MDT in the case that the radio base station eNB#2 detects that "Serving PLMN" of the mobile station UE changes or in the case that the radio base station eNB#2 receives "MDT User Consent Status" indicating that the performance of the MDT is not authorized in the mobile station UE.

According to the mobile communication system of the third embodiment of the present invention, when the radio base station eNB#2 that is of the radio base station of the handover destination determines that "Serving PLMN" of the mobile station UE changes after the procedure to hand over the mobile station UE to the cell #2 from the cell #1, the radio base station eNB#2 is configured not to provide the instruction to the mobile station UE to perform the MDT irrespective of "MDT User Consent Status" related to the mobile station UE. The "MDT User Consent Status" related to the mobile station UE is received from the radio base station eNB#1. Therefore, the situation to provide the instruction to the roaming-state mobile station UE, in which "Serving PLMN" is changed by the S1 handover or the X2 handover, to perform the MDT can be avoided.

The above features of the embodiments may be expressed as follows.

In the first feature of the embodiments, the mobile communication method includes: a step A in which the radio base station eNB#1 (the first radio base station) determines whether "Serving PLMN (the serving PLMN)" of the mobile station UE changes after the procedure to hand over the mobile station UE to the cell#2 under the dominant of the radio base station eNB#2 (the second radio base station) from the cell#1 under the dominant of the radio base station eNB#1 is completed; and a step B in which the radio base station eNB#1 notifies the radio base station eNB#2 of "MDT User Consent Status (the authorization status)" when detecting that "Serving PLMN" of the mobile station UE changes, "MDT User Consent Status" indicating that the performance of the MDT (the minimization of drive tests) is not authorized in the mobile station UE.

In the first feature of the embodiments, the radio base station eNB#1 may be configured to notify the radio base station eNB#2 of the authorization status using bit information in the step B, the bit information indicating whether the performance of the MDT is authorized in the mobile station UE.

In the second feature of the embodiments, the radio base station eNB#1 in the mobile communication system configured to be able to perform the procedure to hand over the mobile station UE to the cell#2 under the dominant of the radio base station eNB#2 from the cell#1 under the dominant of the radio base station eNB#1, the radio base station eNB#1 includes: the determination unit 13 that is configured to determine whether "Serving PLMN" of the mobile station UE changes after the handover procedure is completed; and the transmission unit 14 that is configured to notify the radio base station eNB#2 of "MDT User Consent Status" indicating that the performance of the MDT is not authorized in the mobile station UE when the determination unit 13 detects that "Serving PLMN" of the mobile station UE changes.

In the second feature of the embodiments, the transmission unit 14 may notify the radio base station eNB#2 of "MDT User Consent Status" using the bit information indicating whether the performance of the MDT is authorized in the mobile station UE.

In the third feature of the embodiments, the mobile communication method includes: a step A in which the mobile station UE transmits "Tracking Area Update Request (the location registration area update request signal)" to the mobile management node MME when "Serving PLMN" of the mobile station UE changes after the procedure to hand over the mobile station UE to the cell#2 under the dominant of the radio base station eNB#2 from the cell#1 under the dominant of the radio base station eNB#1 is completed; and a step B in which the mobile management node MME notifies the radio base station eNB#2 of "MDT User Consent Status" indicating that the performance of the MDT is not authorized in the mobile station UE using "Downlink NAS Transport message" that transmits "Tracking Area Update Accept (the location registration area update reception signal)".

In the third feature of the embodiments, the mobile management node MME may be configured to notify the radio base station eNB#2 of the authorization status using the bit information in the step B, the bit information indicating whether the performance of the MDT is authorized in the mobile station UE.

In the fourth feature of the embodiments, the mobile management node MME is configured to notify the radio base station eNb#2 of "MDT User Consent Status" indicating that the performance of the MDT is not authorized in the mobile station UE using "Downlink NAS Transport message" that transmits "Tracking Area Update Accept" in response to "Tracking Area Update Request" received from the mobile station UE when "Serving PLMN" of the mobile station UE changes after the procedure to hand over the mobile station UE to the cell#2 under the dominant of the radio base station eNb#2 from the cell#1 under the dominant of the radio base station eNb#1 is completed.

In the fourth feature of the embodiments, the mobile management node may notify the radio base station eNb#2 of the authorization status using the bit information indicating whether the performance of the MDT is authorized in the mobile station UE.

In the fifth feature of the embodiments, the mobile communication method for performing the procedure to hand over the mobile station UE to the cell#2 under the dominant of the radio base station eNB#2 from the cell#1 under the dominant of the radio base station eNB#1, includes: a step in which the radio base station eNB#1 notifies the radio base station eNB#2 of "Consent Status PLMN List (the PLMN list)" valid in the radio base station eNB#1; a step in which the radio base station eNb#2 determines whether "Serving PLMN" of the mobile station UE changes after the handover procedure is completed based on "Consent Status PLMN List"; and a step in which the radio base station eNb#2 does not provide the instruction to the mobile station UE to perform the MDT when detecting that "Serving PLMN" of the mobile station UE changes.

In the sixth feature of the embodiments, the radio base station eNB#2 in the mobile communication system configured to be able to perform the procedure to hand over the mobile station UE to the cell#2 under the dominant of the radio base station eNB#2 from the cell#1 under the dominant of the radio base station eNB#1, includes: the reception unit 22 that is configured to acquire "Consent Status PLMN List" , which is valid in the radio base station eNB#1, from the radio base station eNB#1; the determination unit 23 that is configured to determine whether "Serving PLMN" of the mobile station UE changes after the handover procedure is completed based on "Consent Status PLMN List"; and the transmission unit 24 that is configured not to provide the instruction to the mobile station UE to perform the MDT when the determination unit 23 detects that "Serving PLMN" of the mobile station UE changes.

The operation of the mobile management node MME, the radio base stations eNB#1/eNB#2, or the mobile station UE may be performed by hardware, a software module executed by a processor, or a combination of thereof.

The software module may be provided in any storage medium such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, and a CD-ROM.

The storage medium is connected to the processor such that the processor can write and read information in and from the storage medium. The storage medium may be integrated in the processor. The storage medium and the processor may be provided in an ASIC. The ASIC may be provided in the mobile management node MME, the radio base stations eNB#1/eNB#2, or the mobile station UE. The storage medium and the processor may be provided as a discrete component in the mobile management node MME, the radio base stations eNB#1/eNB#2, or the mobile station UE.

In the description, the E-UTRAN (LTE) system is used as the radio access system by way of example. However, the present invention can also be applied to the case that a UTRAN system or a GERAN system is used as the radio access system.

In such cases, the mobile management node MME is replaced with a packet switch SGSN that is of the mobile management node in the UTRAN system or the GERAN system, and the radio base station eNB is replaced with a radio control device RNC/BSC in the UTRAN system or the GERAN system.

Although the present invention is described in detail using the embodiment, it is clear for those skilled in the art that the present invention is not limited to the embodiment. Various corrections and changes can be made without departing from the scope of the present invention. Accordingly, the description is aimed only at the illustration, and the description has no restrictive meaning to the present invention.

This application is based on Japanese Patent Application No. 2011-102516 filed with the Japan Patent Office on April 28, 2011, the entire content of which is hereby incorporated by reference.

### Industrial Applicability

As described above, the present invention can provide a mobile communication method, a radio base station, and a mobile management node, for being able to perform control such that an instruction is not provided to a mobile station UE, which becomes a roaming state by handover, to perform MDT.

### Reference Signs List

- UE: mobile station
- eNB#1, eNB#2: radio base station
- 11, 21: management unit
- 12, 22: reception unit
- 13, 23: determination unit
- 14, 24: transmission unit

## Claims

1. A mobile communication method comprising:
a step A in which a first radio base station determines whether a serving PLMN of a mobile station changes after a procedure to hand over the mobile station to a cell under a dominant of a second radio base station from a cell under a dominant of the first radio base station is completed; and
a step B in which the first radio base station notifies the second radio base station of an authorization status when detecting that the serving PLMN of the mobile station changes, the authorization status indicating that performance of minimization of drive tests is not authorized in the mobile station.

2. The mobile communication method according to claim 1, wherein the first radio base station notifies the second radio base station of the authorization status using bit information in the step B, the bit information indicating whether the performance of the minimization of drive tests is authorized in the mobile station.

3. A radio base station that can operate as a first radio base station in a mobile communication system configured to be able to perform a procedure to hand over a mobile station to a cell under a dominant of a second radio base station from a cell under a dominant of the first radio base station, the radio base station comprising:
a determination unit that is configured to determine whether the serving PLMN of the mobile station changes after the handover procedure is completed; and
a transmission unit that is configured to notify the second radio base station of an authorization status indicating that performance of minimization of drive tests is not authorized in the mobile station when the determination unit detects that the serving PLMN of the mobile station changes.

4. The radio base station according to claim 3, wherein the transmission unit is configured to notify the second radio base station of the authorization status using bit information indicating whether the performance of the minimization of drive tests is authorized in the mobile station.

5. A mobile communication method comprising:
a step A in which a mobile station transmits a location registration area update request signal to a mobile management node when a serving PLMN of the mobile station changes after a procedure to hand over the mobile station to a cell under a dominant of a second radio base station from a cell under a dominant of a first radio base station is completed; and
a step B in which the mobile management node notifies the second radio base station of an authorization status indicating that performance of minimization of drive tests is not authorized in the mobile station using a message that transmits a location registration area update reception signal.

6. The mobile communication method according to claim 5, wherein the mobile management node notifies the second radio base station of the authorization status using bit information in the step B, the bit information indicating whether the performance of the minimization of drive tests is authorized in the mobile station.

7. A mobile management node that is configured to notify a second radio base station of an authorization status indicating that performance of minimization of drive tests is not authorized in a mobile station using a message that transmits a location registration area update reception signal in response to a location registration area update request signal received from the mobile station when a serving PLMN of the mobile station changes after a procedure to hand over the mobile station to a cell under a dominant of a second radio base station from a cell under a dominant of a first radio base station is completed.

8. The mobile management node according to claim 7, wherein the mobile management node is configured to notify the second radio base station of the authorization status using bit information indicating whether the performance of the minimization of drive tests is authorized in the mobile station.

9. A mobile communication method for performing a procedure to hand over a mobile station to a cell under a dominant of a second radio base station from a cell under a dominant of a first radio base station, the mobile communication method comprising:
a step in which the first radio base station notifies the second radio base station of a PLMN list valid in the first radio base station;
a step in which the second radio base station determines whether a serving PLMN of the mobile station changes after the handover procedure is completed based on the PLMN list; and
a step in which the second radio base station does not provide an instruction to the mobile station to perform minimization of drive tests when detecting that the serving PLMN of the mobile station changes.

10. A radio base station that can operate as a second radio base station in a mobile communication system configured to be able to perform a procedure to hand over a mobile station to a cell under a dominant of the second radio base station from a cell under a dominant of a first radio base station, the radio base station comprising:
a reception unit that is configured to acquire a PLMN list, which is valid in the first radio base station, from the first radio base station;
a determination unit that is configured to determine whether a serving PLMN of the mobile station changes after the handover procedure is completed based on the PLMN list; and
a transmission unit that is configured not to provide an instruction to the mobile station to perform minimization of drive tests when the determination unit detects that the serving PLMN of the mobile station changes.
